# EUROPEAN PATENT SPECIFICATION

(11) **EP 3 136 783 B1**
(45) Date of publication and mention of the grant of the patent: **14.03.2018**
(21) Application number: 14891346.0
(22) Date of filing: 07.05.2014
(51) Int. Cl.: H04W 36/12, H04W 48/18

(54) **METHOD, DEVICE AND SYSTEM FOR SELECTING ROUTING SGSN**
VERFAHREN, VORRICHTUNG UND SYSTEM ZUR AUSWAHL VON LEITWEGLENKUNGS-SGSN
PROCÉDÉ, DISPOSITIF ET SYSTÈME DE SÉLECTION DE SGSN D'ACHEMINEMENT

(43) Date of publication of application: 01.03.2017
(73) Proprietor: Huawei Technologies Co., Ltd., Longgang District Shenzhen, Guangdong 518129 (CN)
(72) Inventor: WANG, Yajun, Shenzhen Guangdong 518129 (CN); WANG, Liyi, Shenzhen Guangdong 518129 (CN)
(74) Representative: Goddar, Heinz J.
(86) International application number: PCT/CN2014/076934
(87) International publication number: WO 2015/168876

(56) References cited:
- EP-A1- 2 863 682
- CN-A- 1 620 838
- CN-A- 1 852 304
- CN-A- 101 232 729
- US-A1- 2013 195 009
- US-A1- 2013 195 009
- ERICSSON ET AL: "Network sharing and CSFB", 3GPP DRAFT; S2-124549- DISC- NETWORK SHARING AND CSFB PRC-PA5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. New Orleans; 20121112 - 20121116 6 November 2012 (2012-11-06), XP050684207, Retrieved from the Internet: URL:http://www.3gpp.org/ftp/tsg_sa/WG2_Arc h/TSGS2_94_New_Orleans/Docs/ [retrieved on 2012-11-06]
- ERICSSON ET AL: "CS/PS Coordination", 3GPP DRAFT; S2-122720-WAS-S2-121979-WAS-121246-DISC ON CS-PS COODINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Barcelona, Spain; 20120709 - 20120713, 3 July 2012 (2012-07-03), XP050633253, [retrieved on 2012-07-03]
- ERICSSON: "Use cases for PLMN selection at handover based on UE capability", 3GPP DRAFT; S2-141226_23704_UE_CAPABILITY_USE_CASES_B, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. St. Julian; 20140324 - 20140328 28 March 2014 (2014-03-28), XP050835769, Retrieved from the Internet: URL:http://www.3gpp.org/ftp/tsg_sa/WG2_Arc h/TSGS2_102_Malta/Docs/ [retrieved on 2014-03-28]

## Description

### TECHNICAL FIELD

The present invention relates to a mobile communications system, and in particular, to a method, a device, and a system for selecting a routing SGSN.

### BACKGROUND

In a conventional network, one mobile station (mobile station, MS) in a conventional wireless network can access only one operator core network. However, in multi-operator core network (multi-operator core network, MOCN) networking, one radio access network can be connected to multiple operator core networks. The radio access network may be cooperatively built by multiple operators, or may be individually built by one of the operators, and the other operators lease the network.

MOCN cell sharing is a solution for sharing a radio access network, which allows different operators to share a base station system (base station system, BSS) device at a granularity of a cell by using an independent core network device, that is, different operators may use a same cell. When moving to an MOCN cell, and performing a registration/routing area update (routing area update, RAU) process, an MS selects an operator according to an international mobile subscriber identity (international mobile subscriber identity, IMSI) or a network resource identifier (network resource identifier, NRI) carried in a packet temporary mobile subscriber identity (packet temporary mobile subscriber identity, P-TMSI). Similarly, when moving to the MOCN cell, and performing a location area update process (Location area update, LAU), the MS selects an operator according to an IMSI or an NRI carried in a temporary mobile subscriber identity (temporary mobile subscriber identity, TMSI). In other words, when an operator is selected for a same MS separately in a packet switched (packet switched, PS) domain and a circuit switched (circuit switched, CS) domain, there may be a scenario in which the selected operators are not the same, and as a result, settlements for the CS domain and the PS domain of the same MS are made by different operators, thereby increasing complexity of a fee settlement.

US 2013/195009 A1 discloses a method in an SGSN in a communications network. A user equipment has moved from a source PS domain to a CS domain due to SRVCC or due to CSFB. The SGSN determines that the SGSN comprises information about a CS/PS coordination indicator and a CS operator indicator. The SGSN evaluates whether a target PS operator is the same as a CS operator when the SGSN is determined to comprises the CS/PS coordination indicator and the CS operator indicator. The SGSN determines that the user equipment shall remain connected to the SGSN in the target PS domain when the CS operator is the same as the target PS operator. The SGSN sends a reject command to the controller node when the CS operator is different from the target PS operator.

ERICSSON ET AL: "Network sharing and CSFB", 3GPP DRAFT; S2-124549- DISC-NETWORK SHARING AND CSFB PRC-PA5, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. New Orleans; 20121112 - 20121116 6 November 2012 (2012-11-06), discloses a discussion of operator selection for CSFB in a Network Sharing configuration. ERICSSON ET AL: "CS/PS Coordination", 3GPP DRAFT; S2-122720-WAS-S2-121979-WAS-121246-DISC ON CS-PS COORDINATION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. Barcelona, Spain; 20120709 - 20120713, 3 July 2012 (2012-07-03), discloses a discussion of CS/PS Coordination for Network Sharing in the target network.

### SUMMARY

The present invention provides a method according to claim 1, and a device according to claim 4 for selecting a routing SGSN, which can implement consistency of selection of a CS domain and a PS domain of a same MS.

A first aspect of the present invention provides a method for selecting a routing SGSN, where the method includes: receiving a routing area update RAU message sent by a mobile station MS; obtaining information of a circuit switched CS domain operator of the MS if a cell on which the MS camps is shared by at least two operators; and selecting an SGSN from serving GPRS support nodes SGSNs of a CS domain operator of the MS as a routing SGSN of the MS according to the information.

With reference to the first aspect, in a first implementation manner of the first aspect, the MS simultaneously runs a CS service and a packet switched PS service, and the RAU message is carried on a dedicated control channel DCCH of the CS service.

With reference to the first aspect, in a second implementation manner of the first aspect, the MS is in an idle state, and before the receiving an RAU message sent by an MS, the method further includes: receiving a location area update LAU message sent by the MS, and selecting the CS domain operator of the MS; and the selecting an SGSN from SGSNs of a CS domain operator of the MS as a routing SGSN of the MS includes: selecting an SGSN from SGSNs of the selected CS domain operator as the routing SGSN of the MS.

With reference to the first aspect, in a third implementation manner of the first aspect, the MS is in an idle state, and the obtaining information of a CS domain operator of the MS includes: determining whether the CS domain operator of the MS is selected; and if the CS domain operator of the MS is selected, obtaining the information according to the selected CS domain operator; or if the CS domain operator of the MS is not selected, saving the RAU message, and after the CS domain operator of the MS is selected, obtaining the information according to the selected CS domain operator.

A second aspect of the present invention provides a device for selecting a routing SGSN, including: a receiving unit, a first selection unit, and an obtaining unit, where
the receiving unit is configured to receive a routing area update RAU message sent by a mobile station MS; the obtaining unit is configured to obtain information of a circuit switched CS domain operator of the MS if a cell on which the MS camps is shared by at least two operators; and the selection unit is configured to select an SGSN from serving GPRS support nodes SGSNs of the CS domain operator of the MS as a routing SGSN of the MS according to the information obtained by the obtaining unit.

With reference to the second aspect, in a first implementation manner of the second aspect, the MS simultaneously runs a CS service and a packet switched PS service, and the RAU message is carried on a dedicated control channel DCCH of the CS service.

With reference to the second aspect, in a second implementation manner of the second aspect, the MS is in an idle state, and
the receiving unit is further configured to, before the receiving the RAU message sent by the MS, receive a location area update LAU message sent by the MS; the obtaining unit is further configured to select the CS domain operator of the MS according to the LAU message received by the receiving unit; and the selection unit is specifically configured to select, from SGSNs of the CS domain operator selected by the obtaining unit, an SGSN as the routing SGSN of the MS.

With reference to the second aspect, in a third implementation manner of the second aspect, the MS is in an idle state, and the obtaining unit is further configured to: determine whether the CS domain operator of the MS is selected; and if the CS domain operator of the MS is selected, notify the selection unit of the information; or if the CS domain operator of the MS is not selected, notify the selection unit of the information after the CS domain operator of the MS is selected; and the selection unit is specifically configured to receive a notification message sent by the obtaining unit; and select an SGSN from the SGSNs of the CS domain operator of the MS as the routing SGSN of the MS according to the information.

A third aspect of the present invention provides a device for selecting a routing SGSN, including: a receiver and a processor, where the receiver is configured to receive a routing area update RAU message sent by a mobile station MS; and the processor is configured to: obtain information of a circuit switched CS domain operator of the MS if a cell on which the MS camps is shared by at least two operators; and select an SGSN from serving GPRS support nodes SGSNs of the CS domain operator of the MS as a routing SGSN of the MS according to the information.

With reference to the third aspect, in a first implementation manner of the third aspect, the MS simultaneously runs a CS service and a packet switched PS service, and the RAU message is carried on a dedicated control channel DCCH of the CS service.

With reference to the third aspect, in a second implementation manner of the third aspect, the MS is in an idle state, and the receiver is further configured to, before receiving the RAU message sent by the MS, receive a location area update LAU message sent by the MS; and the processor is further configured to select the CS domain operator of the MS according to the LAU message received by the receiver; and obtain the information according to the selected CS domain operator.

With reference to the third aspect, in a third implementation manner of the third aspect, the MS is in an idle state, and the processor is further configured to: determine whether the CS domain operator of the MS is selected; and if the CS domain operator of the MS is selected, obtain the information; or if the CS domain operator of the MS is not selected, save the RAU message, and obtain the information after the CS domain operator of the MS is selected.

It can be learned from the foregoing technical solutions that, the method for selecting a routing SGSN provided in the embodiments of the present invention includes: receiving an RAU message sent by an MS; obtaining information of a CS domain operator of the MS if a cell on which the MS camps is shared by at least two operators; and selecting an SGSN from SGSNs of a CS domain operator of the MS as a routing SGSN of the MS according to the information. According to the method, selecting a routing SGSN of a PS domain from SGSNs of a CS domain operator ensures consistency of operator selection of a CS domain and a PS domain of a same MS, thereby reducing complexity of a fee settlement for a user.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a flowchart of a method for selecting a routing SGSN according to an embodiment of the present invention;
FIG. 2 is a flowchart of another method for selecting a routing SGSN according to an embodiment of the present invention;
FIG. 3 is a flowchart of another method for selecting a routing SGSN according to an embodiment of the present invention;
FIG. 4 is a structural block diagram of a device for selecting a routing SGSN according to an embodiment of the present invention; and
FIG. 5 is a structural block diagram of a network side device for selecting a routing SGSN according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

Various aspects are described in this specification with reference to a mobile station and a base station controller.

The mobile station may be a wireless terminal. The wireless terminal may refer to a device that provides a user with voice and/or data connectivity, a hand-held device having a wireless connection function, or another processing device connected to a wireless modem. The wireless terminal may communicate with one or more core networks through a radio access network (Radio Access Network, RAN). The wireless terminal may be a mobile terminal, such as a mobile phone (also referred to as a "cellular" phone) and a computer having a mobile terminal, for example, may be a portable, pocket-sized, hand-held, computer built-in, or in-vehicle mobile apparatus, which exchanges voice and/or data with the radio access network. For example, it may be a device such as a personal communication service (Personal Communication Service, PCS) phone, a cordless telephone set, a Session Initiation Protocol (SIP) phone, a wireless local loop (WLL, Wireless Local

Loop) station, or a personal digital assistant (PDA, Personal Digital Assistant). The wireless terminal may also be referred to as a system, a subscriber unit (Subscriber Unit), a subscriber station (Subscriber Station), a remote station (Remote Station), an access point (Access Point), a remote terminal (Remote Terminal), an access terminal (Access Terminal), a user terminal (User Terminal), a user agent (User Agent), or user equipment (User Equipment).

The base station controller may be a Global System for Mobile Communications (Global System for Mobile Communications, GSM) or a base station controller (base station controller, BSC) in Code Division Multiple Access (Code Division Multiple Access, CDMA), or may be a radio network controller (Radio Network Controller, RNC) in the CDMA, which is not limited in the present invention.

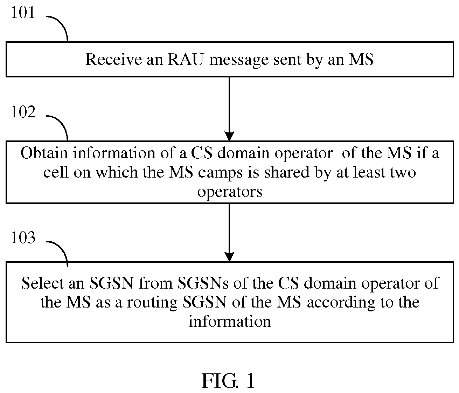

As shown in FIG. 1, this embodiment of the present invention provides a method for selecting a routing SGSN, where the method may be executed by a network side device. Details are described as follows:
101. Receive an RAU message sent by an MS.

When the MS simultaneously runs a CS service and a PS service, the RAU message may be carried on a dedicated control channel (dedicated control channel, DCCH) of the CS service. For example, in a GSM field, the DCCH may be a standalone dedicated control channel (standalone dedicated control channel, SDCCH) or a slow associated control channel (slow associated control channel, SACCH).

The RAU message is sent by the MS to a base station controller in a case in which a routing area update occurs.

102. Obtain information of a CS domain operator of the MS if a cell on which the MS camps is shared by at least two operators.

The information of the CS domain operator of the MS is used to indicate an operator who provides the MS with the CS service.

Whether the cell on which the MS camps is shared by at least two operators may be indicated by using a preset identifier of the cell on which the MS camps. The base station controller may determine, by using the preset identifier, that the cell on which the MS camps is shared by at least two operators, and may further determine, by using a correspondence between the cell on which the MS camps and an operator, whether a quantity of operators is greater than 1; and when a quantity of operators corresponding to the cell on which the MS camps is greater than 1, it may be determined that the cell on which the MS camps is shared by at least two operators, which is used herein only as an example for description and is not construed as a limitation. The cell on which the MS camps may specifically means that one MS camps on one cell, and the MS performs registration and authentication in the camping cell to become an authorized user in a network.

It should be noted that, generally, when the MS simultaneously runs the CS service and the PS service, an operator is not changed even if the MS updates a location area. Therefore, an operator of the CS service is selected. However, when the MS is in an idle state, the base station controller selects, after selecting a CS domain operator for the MS, the routing SGSN from SGSNs of the selected CS domain operator.

103. Select an SGSN from SGSNs of the CS domain operator of the MS as a routing SGSN of the MS according to the information.

The foregoing network side device may be a base station controller, and the base station controller includes a built-in packet control unit (packet control unit, PCU). The foregoing network side device may also be a base station controller and an external PCU, which is not limited herein.

According to the method for selecting a routing SGSN provided in this embodiment of the present invention, an RAU message sent by an MS is received; and information of the CS domain operator of the MS is obtained if a cell on which the MS camps is shared by at least two operators, and an SGSN is selected from SGSNs of a CS domain operator of the MS as a routing SGSN of the MS according to the information, that is, selecting a routing SGSN of a PS domain from the SGSNs of the CS domain operator ensures consistency of operator selection of a CS domain and a PS domain of a same MS, thereby reducing complexity of a fee settlement for a user.

Optionally, in an implementation scenario, the MS is in an idle state, and prior to step 101, the method further includes step 100.

100. Receive an LAU message sent by the MS, and select a CS domain operator of the MS.

In this case, step 103 may specifically include: selecting an SGSN from SGSNs of a selected CS domain operator as a routing SGSN of the MS. The selected CS domain operator is the operator selected in step 100.

Optionally, in another implementation scenario, the MS is in an idle state, and step 102 specifically includes:
determining whether a CS domain operator of the MS is selected; and
if the CS domain operator of the MS is selected, obtaining the information of the CS domain operator of the MS according to the selected CS domain operator; or
if the CS domain operator of the MS is not selected, saving the RAU message, and after the CS domain operator of the MS is selected, obtaining the information of the CS domain operator of the MS according to the selected CS domain operator.

Specifically, when the RAU message of the MS is received, the RAU message is cached in a case in which the CS domain operator of the MS is not selected; the information of the CS domain operator of the MS is obtained after the base station controller selects a CS domain operator for the MS.

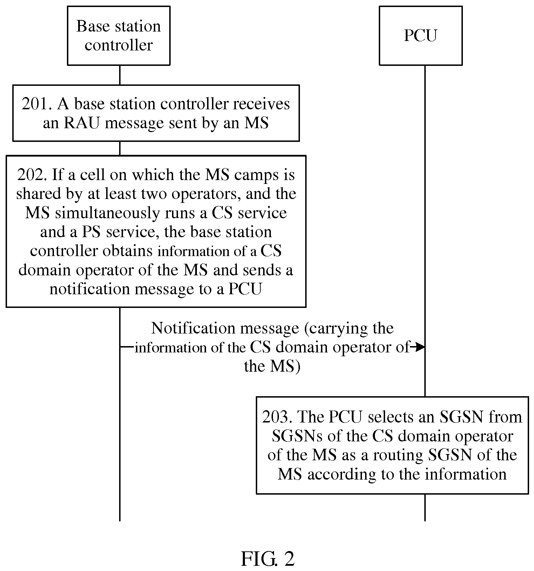

As shown in FIG. 2, this embodiment of the present invention provides another method for selecting a routing SGSN, where the method is executed by a network side device, and the network side device includes a base station controller and a PCU. Details are described as follows:
201. The base station controller receives an RAU message sent by an MS.
202. If a cell on which the MS camps is shared by at least two operators, and the MS simultaneously runs a CS service and a PS service, the base station controller obtains information of a CS domain operator of the MS and sends a notification message to the PCU.

The notification message carries the information of the CS domain operator of the MS, specifically, may carry the RAU message and the obtained information, or may carry only the information of the CS domain operator of the MS, which is not limited herein.

203. The PCU selects an SGSN from SGSNs of the CS domain operator of the MS as a routing SGSN of the MS according to the information.

For related descriptions of the foregoing steps, refer to the embodiment shown in FIG. 1, which is not described herein.

The method for selecting a routing SGSN provided in this embodiment of the present invention is used in a scenario in which an MS simultaneously runs a CS service and a PS service. Selecting a routing SGSN directly from SGSNs of a CS domain operator of the MS ensures consistency of operator selection of a CS domain and a PS domain of a same MS, thereby reducing complexity of a fee settlement for a user, improving efficiency of selecting a routing SGSN, and reducing a computation amount of a network side device.

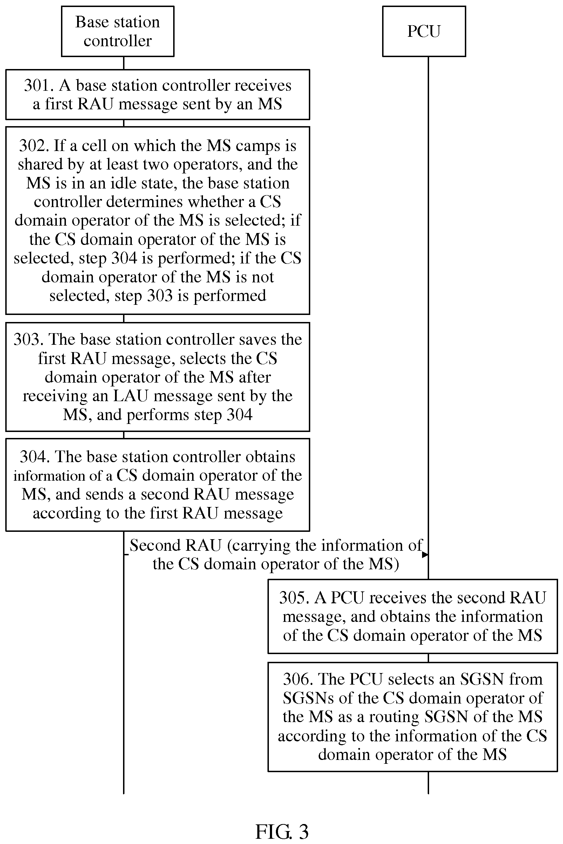

As shown in FIG. 3, this embodiment of the present invention provides another method for selecting a routing SGSN, where the method is executed by a network side device, and the network side device includes a base station controller and a PCU. Details are described as follows:
301. The base station controller receives a first RAU message sent by an MS.
302. If a cell on which the MS camps is shared by at least two operators, and the MS is in an idle state, the base station controller determines whether a CS domain operator of the MS is selected; if the CS domain operator of the MS is selected, step 304 is performed; if the CS domain operator of the MS is not selected, step 303 is performed.
303. The base station controller saves the first RAU message, selects the CS domain operator of the MS after receiving an LAU message sent by the MS, and performs step 304.
   Specifically, the CS domain operator may be selected according to an IMSI or an NRI carried in a TMSI, which pertains to the prior art and details are not described herein.
304. The base station controller obtains information of a CS domain operator of the MS, and sends a second RAU message according to the first RAU message.
   The second RAU message carries the information of the CS domain operator of the MS.
305. The PCU receives the second RAU message, and obtains the information of the CS domain operator of the MS.
306. The PCU selects an SGSN from SGSNs of the CS domain operator of the MS as a routing SGSN of the MS according to the information of the CS domain operator of the MS.

The method for selecting a routing SGSN provided in this embodiment of the present invention is used in a scenario in which an MS is in an idle state. Subsequent selection of a routing SGSN in a PS domain is determined by determining that a CS domain operator of the MS is selected. If the CS domain operator of the MS is not selected, a network side waits until the CS domain operator of the MS is selected, and then selects a routing SGSN from SGSNs of the selected CS domain operator, which ensures consistency of operator selection of a CS domain and a PS domain of a same MS, thereby reducing complexity of a fee settlement for a user.

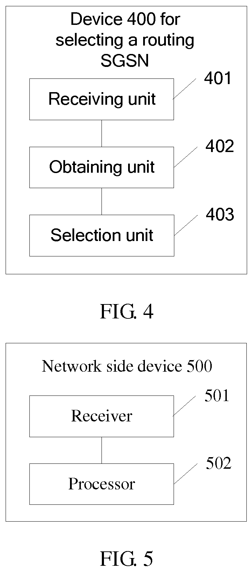

As shown in FIG. 4, this embodiment of the present invention provides a device 400 for selecting a routing SGSN, where the device 400 specifically includes: a receiving unit 401, an obtaining unit 402, and a selection unit 403. Details are described as follows:
The receiving unit 401 is configured to receive an RAU message sent by an MS.

The obtaining unit 402 is configured to obtain information of a CS domain operator of the MS if a cell on which the MS camps is shared by at least two operators.

The selection unit 403 is configured to select an SGSN from serving GPRS support nodes SGSNs of the CS domain operator of the MS as a routing SGSN of the MS according to the information obtained by the obtaining unit 402.

When the MS simultaneously runs a CS service and a PS service, the RAU message is carried on a DCCH of the CS service. For specific descriptions of the DCCH, refer to related descriptions in step 101.

Whether the cell on which the MS camps is shared by at least two operators may be indicated by using a preset identifier of the cell on which the MS camps. The base station controller may determine, by using the preset identifier, that the cell on which the MS camps is shared by at least two operators, and may further determine, by using a correspondence between the cell on which the MS camps and an operator, whether a quantity of operators is greater than 1; and when a quantity of operators corresponding to the cell on which the MS camps is greater than 1, it may be determined that the cell on which the MS camps is shared by at least two operators, which is used herein only as an example for description and is not construed as a limitation.

It should be noted that, generally, when the MS simultaneously runs the CS service and the PS service, an operator is not changed even if the MS updates a location area. Therefore, an operator of the CS service is selected. However, when the MS is in an idle state, the base station controller selects, after selecting a CS domain operator for the MS, the routing SGSN from SGSNs of the selected CS domain operator.

It should be noted that, the foregoing device 400 may be a base station controller, or the foregoing device 400 may be a base station controller and an external PCU, which is not limited herein. When the foregoing device 400 is the base station controller and the PCU, the base station controller includes the receiving unit 401 and the obtaining unit 402, and the PCU includes the selection unit 403. All units in the foregoing device 400 may be included in different network entities, which is not limited herein.

According to the device for selecting a routing SGSN provided in this embodiment of the present invention, selecting a routing SGSN of a PS domain from SGSNs of a CS domain operator ensures consistency of operator selection of a CS domain and a PS domain of a same MS, thereby reducing complexity of a fee settlement for a user.

Optionally, when the MS is in an idle state, the receiving unit 401 is further configured to, before receiving the RAU message sent by the MS, receive a location area update LAU message sent by the MS.

The obtaining unit 402 is further configured to select the CS domain operator of the MS according to the LAU message received by the receiving unit 401.

The selection unit 403 is specifically configured to select, from SGSNs of the CS domain operator selected by the obtaining unit 402, an SGSN as the routing SGSN of the MS.

Optionally, when the MS is in an idle state, the obtaining unit 402 is further configured to: determine whether the CS domain operator of the MS is selected; and if the CS domain operator of the MS is selected, notify the selection unit of the information of the CS domain operator of the MS; or if the CS domain operator of the MS is not selected, notify the selection unit of the information of the CS domain operator of the MS after the CS domain operator of the MS is selected.

The selection unit 403 is specifically configured to receive a notification message sent by the obtaining unit 402, and select an SGSN from the SGSNs of the CS domain operator of the MS as the routing SGSN of the MS according to the information.

It should be noted that, the device 400 may be configured to perform the steps in the embodiments shown in FIG. 1, FIG. 2, or FIG. 3. For details, refer to related descriptions in the foregoing method embodiments, which are not described herein.

As shown in FIG. 5, this embodiment of the present invention provides a network side device 500 for selecting a routing SGSN, including: a receiver 501 and a processor 502. Details are described as follows:
The receiver 501 is configured to receive a routing area update RAU message sent by a mobile station MS.

The processor 502 is configured to: obtain information of a circuit switched CS domain operator of the MS if a cell on which the MS camps is shared by at least two operators; and select an SGSN from serving GPRS support nodes SGSNs of the CS domain operator of the MS as a routing SGSN of the MS according to the information.

When the MS simultaneously runs a CS service and a PS service, the RAU message is carried on a DCCH of the CS service.

According to the device for selecting a routing SGSN provided in this embodiment of the present invention, selecting a routing SGSN of a PS domain from SGSNs of a CS domain operator ensures consistency of operator selection of a CS domain and a PS domain of a same MS, thereby reducing complexity of a fee settlement for a user.

Optionally, when the MS is in an idle state, the receiver 501 is further configured to, before receiving the RAU message sent by the MS, receive a location area update LAU message sent by the MS.

The processor 502 is further configured to select the CS domain operator of the MS according to the LAU message received by the receiver 501; and obtain the information of the CS domain operator of the MS according to the selected CS domain operator.

Optionally, when the MS is in an idle state, the processor 502 is further configured to:
determine whether the CS domain operator of the MS is selected; and if the CS domain operator of the MS is selected, obtain the information of the CS domain operator of the MS; or if the CS domain operator of the MS is not selected, save the RAU message, and obtain the information of the CS domain operator of the MS after the CS domain operator of the MS is selected.

It should be noted that, the device 500 may be configured to perform the steps in the embodiments shown in FIG. 1, FIG. 2, or FIG. 3. For details, refer to related descriptions in the foregoing method embodiments, which are not described herein.

Persons of ordinary skill in the art may understand that all or a part of the steps of the foregoing method embodiments may be implemented by a program instructing relevant hardware. The foregoing program may be stored in a computer readable storage medium. When the program runs, the steps including the foregoing method embodiments are performed; the foregoing storage medium includes: any medium that can store program code, such as a ROM, a RAM, a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method for selecting a routing serving GPRS support node, SGSN, wherein the method comprises:
receiving (101) a routing area update, RAU, message sent by a mobile station, MS;
obtaining (102) information of a circuit switched, CS, domain operator of the MS if a cell on which the MS camps is shared by at least two operators; and
selecting (103) an SGSN from SGSNs of the CS domain operator of the MS as a routing SGSN of the MS according to the information, wherein the MS simultaneously runs a CS service and a packet switched, PS, service, **characterized in that** the RAU message is carried on a dedicated control channel, DCCH, of the CS service.

2. The method according to claim 1, wherein the MS is in an idle state, and before the receiving an RAU message sent by an MS, the method further comprises:
receiving a location area update, LAU, message sent by the MS, and selecting the CS domain operator of the MS; and
the selecting an SGSN from SGSNs of the CS domain operator of the MS as a routing SGSN of the MS comprises:
selecting an SGSN from SGSNs of the selected CS domain operator as the routing SGSN of the MS.

3. The method according to claim 1, wherein the MS is in an idle state, and the obtaining information of a CS domain operator of the MS comprises:
determining whether the CS domain operator of the MS is selected; and
if the CS domain operator of the MS is selected, obtaining the information of the CS domain operator of the MS according to the selected CS domain operator; or
if the CS domain operator of the MS is not selected, saving the RAU message, and after the CS domain operator of the MS is selected, obtaining the information of the CS domain operator of the MS according to the selected CS domain operator.

4. A device for selecting a routing serving GPRS support node, SGSN, the device comprising: a receiving unit (401), a first selection unit (402), and an obtaining unit (403), wherein
the receiving unit (401) is configured to receive a routing area update, RAU, message sent by a mobile station, MS;
the obtaining unit (402) is configured to obtain information of a circuit switched, CS, domain operator of the MS if a cell on which the MS camps is shared by at least two operators; and
the selection unit (403) is configured to select an SGSN from SGSNs of the CS domain operator of the MS as a routing SGSN of the MS according to the information obtained by the obtaining unit (402), wherein the MS simultaneously runs a CS service and a packet switched PS service, **characterized in that** the RAU message is carried on a dedicated control channel, DCCH, of the CS service.

5. The device according to claim 4, wherein the MS is in an idle state, and the receiving unit (401) is further configured to, before receiving the RAU message sent by the MS, receive a location area update, LAU, message sent by the MS;
the obtaining unit (402) is further configured to select the CS domain operator of the MS according to the LAU message received by the receiving unit (401);
and
the selection unit (403) is specifically configured to select, from the SGSNs of the CS domain operator selected by the obtaining unit (402), an SGSN as the routing SGSN of the MS.

6. The device according to claim 4, wherein the MS is in an idle state, and the obtaining unit (402) is further configured to: determine whether the CS domain operator of the MS is selected; and if the CS domain operator of the MS is selected, notify the selection unit (403) of the information of the selected CS domain operator of the MS; or if the CS domain operator of the MS is not selected, after the CS domain operator of the MS is selected, notify the selection unit (403) of the information of the selected CS domain operator of the MS; and the selection unit (403) is specifically configured to receive a notification message sent by the obtaining unit (402); and select an SGSN from SGSNs of the CS domain operator of the MS as the routing SGSN of the MS according to the information of the CS domain operator of the MS.

## Patentansprüche

1. Verfahren zum Auswählen eines bedienenden Leitweglenkungs-GPRS-Hilfsknoten (SGSN, *Serving GPRS Support Node*), wobei das Verfahren Folgendes umfasst:
Empfangen (101) einer RAU(*Routing Area Update -* Leitweglenkungs-Bereichs-aktualisierung)-Nachricht, die durch eine Mobilstation (MS) gesendet wird;
Erhalten (102) von Informationen eines leitungsvermittelten (CS - *Circuit Switched*) Domain-Betreibers der MS, wenn eine Zelle, in welcher sich die MS befindet, durch mindestens zwei Betreiber gemeinsam genutzt wird; und
Auswählen (103) eines SGSN aus SGSNs des CS-Domain-Betreibers der MS als ein Leitweglenkungs-SGSN der MS gemäß den Informationen, wobei die MS gleichzeitig einen CS-Dienst und einen paketvermittelten (PS - *Packet Switched*) Dienst nutzt, **dadurch gekennzeichnet, dass** die RAU-Nachricht auf einem dedizierten Steuerkanal (DCCH - *Dedicated Control Channel*) des CS-Dienstes übertragen wird.

2. Verfahren nach Anspruch 1, wobei sich die MS in einem Ruhezustand befindet und das Verfahren, vor dem Empfangen einer RAU-Nachricht, die durch eine MS gesendet wird, ferner Folgendes umfasst:
Empfangen einer *LAU*(*Location Area Update -* Positionsbereichsaktualisierung)-Nachricht, die durch die MS gesendet wird, und Auswählen des CS-Domain-Betreibers der MS; und
wobei das Auswählen eines SGSN aus SGSNs des CS-Domain-Betreibers der MS als ein Leitweglenkungs-SGSN der MS Folgendes umfasst:
Auswählen eines SGSN aus SGSNs des ausgewählten CS-Domain-Betreibers als der Leitweglenkungs-SGSN der MS.

3. Verfahren nach Anspruch 1, wobei sich die MS in einem Ruhezustand befindet und das Erhalten von Informationen eines CS-Domain-Betreibers der MS Folgendes umfasst:
Bestimmen, ob der CS-Domain-Betreiber der MS ausgewählt ist; und
wenn der CS-Domain-Betreiber der MS ausgewählt ist, Erhalten der Informationen des CS-Domain-Betreibers der MS gemäß dem ausgewählten CS-Domain-Betreiber; oder
wenn der CS-Domain-Betreiber der MS nicht ausgewählt ist, Speichern der RAU-Nachricht, und nachdem der CS-Domain-Betreiber der MS ausgewählt wurde, Erhalten der Informationen des CS-Domain-Betreibers der MS gemäß dem ausgewählten CS-Domain-Betreiber.

4. Vorrichtung zum Auswählen eines bedienenden Leitweglenkungs-GPRS-Hilfsknoten (SGSN, *Serviug GPRS Support Node*)*,* wobei die Vorrichtung Folgendes aufweist:
eine Empfangseinheit (401), eine erste Auswahleinheit (402) und eine Erhalteeinheit (403), wobei
die Empfangseinheit (401) zum Empfangen einer RAU(*Routing Area Update -* Leitweglenkungs-Bereichsaktualisierung)-Nachricht, die durch eine Mobilstation (MS) gesendet wird, konfiguriert ist;
die Erhalteeinheit (402) zum Erhalten von Informationen eines leitungsvermittelten (CS - *Circuit Switched*) Domain-Betreibers der MS, wenn eine Zelle, in welcher sich die MS befindet, von mindestens zwei Betreibern gemeinsam genutzt wird, konfiguriert ist; und
die Auswahleinheit (403) zum Auswählen eines SGSN aus SGSNs des CS-Domain-Betreibers der MS als ein Leitweglenkungs-SGSN der MS gemäß der Informationen, die durch die Erhalteeinheit (402) erhalten werden, konfiguriert ist, wobei die MS gleichzeitig einen CS-Dienst und einen paketvermittelten (PS - *Packet Switched*) Dienst nutzt, **dadurch gekennzeichnet, dass** die RAU-Nachricht auf einem dedizierten Steuerkanal (DCCH - *Dedicated Control Channel*) des CS-Dienstes übertragen wird.

5. Vorrichtung nach Anspruch 4, wobei sich die MS in einem Ruhezustand befindet, und
die Empfangseinheit (401) ferner, vor dem Empfangen der RAU-Nachricht, die durch die MS gesendet wird, zum Empfangen einer *LAU(Location Area Update -* Positionsbereichsaktualisierung)-Nachricht, die durch die MS gesendet wird, konfiguriert ist;
die Erhalteeinheit (402) ferner zum Auswählen des CS-Domain-Betreibers der MS gemäß der LAU-Nachricht, die durch die Empfangseinheit (401) empfangen wird, konfiguriert ist; und
die Auswahleinheit (403) spezifisch zum Auswählen, aus den SGSNs des CS-Domain-Betreibers, der durch die Erhalteeinheit (402) ausgewählt wird, eines SGSN als der Leitweglenkungs-SGSN der MS konfiguriert ist.

6. Vorrichtung nach Anspruch 4, wobei sich die MS in einem Ruhezustand befindet, und
die Erhalteeinheit (402) ferner zu Folgendem konfiguriert ist: Bestimmen, ob der CS-Domain-Betreiber der MS ausgewählt ist; und wenn der CS-Domain-Betreiber der MS ausgewählt ist, Benachrichtigen der Auswahleinheit (403) über die Informationen des ausgewählten CS-Domain-Betreibers der MS; oder, wenn der CS-Domain-Betreiber der MS nicht ausgewählt ist, nachdem der CS-Domain-Betreiber der MS ausgewählt wurde, Benachrichtigen der Auswahleinheit (403) über die Informationen des ausgewählten CS-Domain-Betreibers der MS; und
die Auswahleinheit (403) spezifisch zum Empfangen einer Benachrichtigungsnachricht, die durch die Erhalteeinheit (402) gesendet wird; und Auswählen eines SGSN aus SGSNs des CS-Domain-Betreibers der MS als der Leitweglenkungs-SGSN den MS gemäß der Informationen des CS-Domain-Betreibers der MS konfiguriert ist.

## Revendications

1. Procédé pour sélectionner un noeud de support GPRS de desserte d'acheminement, SGSN, le procédé comprenant les étapes consistant à :
recevoir (101) un message de mise à jour de zone d'acheminement, RAU, envoyé par une station mobile, MS ;
obtenir (102) des informations d'un opérateur de domaine à commutation de circuits, CS, de la MS si une cellule sur laquelle la MS réside est partagée par au moins deux opérateurs ; et
sélectionner (103) un SGSN parmi les SGSN de l'opérateur de domaine CS de la MS comme étant un SGSN d'acheminement de la MS à partir des informations, la MS exécutant simultanément un service CS et un service à commutation de paquets, PS,
**caractérisé en ce que** le message RAU est transporté sur un canal de commande dédié, DCCH, du service CS.

2. Procédé selon la revendication 1, dans lequel la MS est dans un état inactif, et avant la réception d'un message RAU envoyé par une MS, le procédé comprenant également les étapes consistant à :
recevoir un message de mise à jour de zone d'emplacement, LAU, envoyé par la MS, et sélectionner l'opérateur de domaine CS de la MS ; et
l'étape consistant à sélectionner un SGSN parmi les SGSN de l'opérateur de domaine CS de la MS comme étant un SGSN d'acheminement de la MS consiste à :
sélectionner un SGSN parmi les SGSN de l'opérateur de domaine CS sélectionné comme étant le SGSN d'acheminement de la MS.

3. Procédé selon la revendication 1, dans lequel la MS est dans un état inactif, et l'étape consistant à obtenir des informations d'un opérateur de domaine CS de la MS comprenant les étapes consistant à :
déterminer si l'opérateur de domaine CS de la MS est sélectionné ou non ; et
si l'opérateur de domaine CS de la MS est sélectionné, obtenir les informations de l'opérateur de domaine CS de la MS en fonction de l'opérateur de domaine CS sélectionné ; ou
si l'opérateur de domaine CS de la MS n'est pas sélectionné, sauvegarder le message RAU, et après que l'opérateur de domaine CS de la MS a été sélectionné, obtenir les informations de l'opérateur de domaine CS de la MS en fonction de l'opérateur de domaine CS sélectionné.

4. Dispositif pour sélectionner un noeud de support GPRS de desserte d'acheminement, SGSN, le dispositif comprenant : une unité de réception (401), une première unité de sélection (402) et une unité d'obtention (403), dans lequel
l'unité de réception (401) est conçue pour recevoir un message de mise à jour de zone d'acheminement, RAU, envoyé par une station mobile, MS ;
l'unité d'obtention (402) est conçue pour obtenir des informations d'un opérateur de domaine à commutation de circuits, CS, de la MS si une cellule sur laquelle la MS réside est partagée par au moins deux opérateurs ; et
l'unité de sélection (403) est conçue pour sélectionner un SGSN parmi les SGSN de l'opérateur de domaine CS de la MS comme étant un SGSN d'acheminement de la MS à partir des informations obtenues par l'unité d'obtention (402), la MS exécutant simultanément un service CS et un service à commutation de paquets, PS, **caractérisé en ce que** le message RAU est transporté sur un canal de commande dédié, DCCH, du service CS.

5. Dispositif selon la revendication 4, dans lequel la MS est dans un état inactif, et l'unité de réception (401) est également conçue pour, avant la réception du message RAU envoyé par la MS, recevoir un message de mise à jour de zone d'emplacement, LAU, envoyé par la MS ;
l'unité d'obtention (402) est également conçue pour sélectionner l'opérateur de domaine CS de la MS en fonction du message LAU reçu par l'unité de réception (401) ; et
l'unité de sélection (403) est spécifiquement conçue pour sélectionner, parmi les SGSN de l'opérateur de domaine CS sélectionné par l'unité d'obtention (402), un SGSN comme étant le SGSN d'acheminement de la MS.

6. Dispositif selon la revendication 4, dans lequel la MS est dans un état inactif, et l'unité d'obtention (402) est également conçue pour : déterminer si l'opérateur de domaine CS de la MS est sélectionné ou non ; et si l'opérateur de domaine CS de la MS est sélectionné, fournir à l'unité de sélection (403) les informations de l'opérateur de domaine CS sélectionné de la MS ; ou si l'opérateur de domaine CS de la MS n'est pas sélectionné, après que l'opérateur de domaine CS de la MS a été sélectionné, fournir à l'unité de sélection (403) les informations de l'opérateur de domaine CS sélectionné de la MS ; et l'unité de sélection (403) est spécifiquement conçue pour recevoir un message de notification envoyé par l'unité d'obtention (402) ; et sélectionner un SGSN parmi les SGSN de l'opérateur de domaine CS de la MS comme étant le SGSN d'acheminement de la MS, à partir des informations de l'opérateur de domaine CS de la MS.
